# EUROPÄISCHE PATENTSCHRIFT

(11) **EP 1 383 669 B1**
(45) Veröffentlichungstag und Bekanntmachung des Hinweises auf die Patenterteilung: **15.12.2004**
(21) Anmeldenummer: 02802988.2
(22) Anmeldetag: 04.11.2002
(51) Int. Cl.: B60R 25/02

(54) **VORRICHTUNG ZUM SPERREN DER LENKSPINDEL EINES KRAFTFAHRZEUGS**
DEVICE FOR BLOCKING THE STEERING SPINDLE OF A MOTOR VEHICLE
DISPOSITIF DE BLOCAGE DE L'ARBRE DE DIRECTION D'UN VEHICULE AUTOMOBILE

(30) Priorität: 16.11.2001 DE 10156335
(43) Veröffentlichungstag der Anmeldung: 28.01.2004
(73) Patentinhaber: Huf Hülsbeck & Fürst GmbH & Co. KG, 42551 Velbert (DE)
(72) Erfinder: ZILLMANN, Horst, 81243 München (DE)
(74) Vertreter: Oedekoven, Wolf-Dieter, Dipl.-Ing.
(86) Internationale Anmeldenummer: PCT/EP2002/012291
(87) Internationale Veröffentlichungsnummer: WO 2003/042014

(56) Entgegenhaltungen:
- FR-A- 1 418 109
- FR-A- 2 780 012
- FR-A- 2 783 218
- FR-A- 2 783 781
- US-A- 1 268 137
- US-A- 1 342 728
- US-A- 1 518 150

## Beschreibung

Die Erfindung betrifft eine Vorrichtung zum Sperren der Lenkspindel eines Kraftfahrzeugs gegen Drehen mittels eines in einem Gehäuse zwischen einer Sperrstellung und einer Freigabestellung hin- und herbewegbaren Sperrgliedes, wobei das Gehäuse an einem die Lenkspindel umgebenden Mantelrohr lösbar befestigt wird und das Mantelrohr einen Aufnehmer aufweist, in welchen das Gehäuse einschiebbar ist.

Derartige Vorrichtungen zur Verriegelung der Lenkspindel von Kraftfahrzeugen, so daß sie nicht mehr gedreht werden kann, sind in verschiedenen Ausbildungen bekannt. Dazu gehören sowohl solche, bei denen das Gehäuse senkrecht oder annähernd senkrecht zur Längsachse des Mantelrohrs in den Aufnehmer eingeschoben wird, welcher als radial vom Mantelrohr abstehendes zylindrisches Rohr (EP-B-0 764 566) oder kastenförmiges Rohr ( FR-A-2 783 218, FR-A-2 783 219, FR-A-2 783 220, FR-A-2 783 221 und FR-A-2 783 781, welche auch gattangsbildend ist), das auch an einer Seite in Längsrichtung des Mantelrohrs offen sein und eine entsprechenden U-förmigen Querschnitt aufweisen kann ( DE-C-36 26 014 ), oder als radial vom Mantelrohr abstehender kastenförmiger Rahmen ( DE-C-198 15 311) bzw. als annähernd radial vom Mantelrohr abstehendes zylindrisches Rohr ( FR-A-1 605 119, DE-A-2 323 387, DE-C-36 06 564, EP-A-0 365 423, DE-C-42 19 853 ) ausgebildet ist, als auch solche, bei denen das Gehäuse parallel oder annähernd parallel zur Längsachse des Mantelrohrs in den Aufnehmer eingeschoben wird, welcher topfförmig ( DE-U-1 603 844) oder ringförmig (DE-A-1 119 696, DE-A-1 204 091, FR-A-1 418 109) oder als Flansch ( DE-C-199 06 302) ausgebildet ist.

Der Erfindung liegt die Aufgabe zugrunde, eine Vorrichtung der eingangs angegebenen Art zu schaffen, bei welcher auf einfache und kostengünstige Weise eine leichte Montage des Gehäuses am Mantelrohr und eine ebenso leichte Demontage des Gehäuses vom Mantelrohr gewährleistet und eine hohe Sicherheit gegen unbefugte Demontage sowie gegen gewaltsames Entfernen des Gehäuses vom Mantelrohr und eine problemlose Herstellung des Mantelrohres durch Gießen ermöglicht sind.

Diese Aufgabe ist erfindungsgemäß durch die im kennzeichnenden Teil des Patentanspruchs 1 aufgeführten Merkmale gelöst. Vorteilhafte Ausgestaltungen der Vorrichtung nach der Erfindung sind in den restlichen Patentansprüchen angegeben.

Die erfindungsgemäße Vorrichtung zum Sperren der Lenkspindel eines Kraftfahrzeugs gegen Drehen zeichnet sich dadurch aus, daß das Gehäuse, in welchem das Sperrglied hin- und herbewegbar ist, in den am Mantelrohr der Lenkspindel vorgesehenen Aufnehmer im Unterschied zu den bekannten Vorrichtungen nicht senkrecht oder annähernd senkrecht zur Längsachse des Mantelrohrs auf die Mantelrohrlängsachse zu und auch nicht parallel oder annähernd parallel zur Längsachse des Mantelrohrs einschiebbar ist, sondern quer zur Längsachse des Mantelrohrs, also über die Mantelrohrlängsachse hinweg von einer Seite zur anderen Seite derselben und somit tangential zum Mantelrohr, nicht aber radial oder annähernd radial zum Mantelrohr und auch nicht in Längsrichtung oder annähernd in Längsrichtung des Mantelrohrs, wie bei den bekannten Vorrichtungen der Fall.

Nachstehend sind zwei Ausführungsformen der erfindungsgemäßen Vorrichtung zum Sperren der Lenkspindel eines Kraftfahrzeuges anhand von Zeichnungen beispielsweise beschrieben. Darin zeigt:
Fig 1 die Ansicht in Richtung des Pfeils I in Fig. 2 einer ersten Ausführungsform;
Fig. 2 die Ansicht in Richtung des Pfeils II in Fig. 1, wobei das Sperrglied sich in seiner Sperrstellung befindet;
Fig. 3 den Querschnitt entlang der Linie III - III in Fig. 1, wobei das Sperrglied sich in seiner Sperrstellung befindet;
Fig. 4 den Längsschnitt entlang der Linie IV - IV in Fig. 3;
Fig. 5 den Querschnitt gemäß Fig. 3, wobei das Sperrglied sich in seiner Freigabestellung befindet;
Fig. 6 den Querschnitt gemäß Fig. 3, wobei das Sperrglied sich in einer Vorsperrstellung befindet;
Fig. 7 den Schnitt entlang der Linie VII - VII in Fig. 1;
Fig. 8 den Querschnitt entlang der Linie VIII-VIII in Fig. 1;
Fig. 9 die Ansicht des mit dem Aufnehmer versehenen Mantelrohres perspektivisch in Richtung des Pfeils IX in Fig. 2;
Fig. 10 die Ansicht des Gehäuses in Richtung des Pfeils I in Fig. 2;
Fig. 11 den Querschnitt einer zweiten Ausführungsform, welcher dem Querschnitt nach Fig. 3 entspricht;
Fig. 12 den Längsschnitt entlang der Linie XII - XII in Fig. 11;
Fig. 13 den Querschnitt der zweiten Ausführungsform, welcher dem Querschnitt nach Fig. 8 entspricht;
Fig. 14 die Ansicht des mit dem Aufnehmer versehenen Mantelrohres der zweiten Ausführungsform, welche der Ansicht nach Fig. 9 entspricht

Die dargestellten Vorrichtungen zum Sperren der Lenkspindel 1 eines Kraftfahrzeugs gegen Drehen weisen jeweils ein Sperrglied 2 auf, welches mit einer auf der Lenkspindel 1 befestigten Sperrhülse 3 mit Sperrnuten 4 zusammenwirkt. Die Lenkspindel 1 und die Sperrhülse 3 sind von einem Mantelrohr 5 mit einer Durchgangsöffnung 6 für das Sperrglied 2 umschlossen.

Das Sperrglied 2 ist als Bolzen mit rechteckigem Querschnitt ausgebildet und in einem Kanal 7 entsprechenden Querschnitts axial verschieblich gelagert, welcher in einem Gehäuse 8 vorgesehen und auf die mit demselben Querschnitt versehene Sperrglieddurchgangsöffnung 6 des Mantelrohres 5 ausgerichtet ist und dessen Längsachse 9 die gemeinsame Längsachse 10 der Lenkspindel 1 und des dazu koaxialen Mantelrohres 5 rechtwinklig schneidet.

Das Gehäuse 8 ist durch einen Deckel 11 verschlossen und am Mantelrohr 5 lösbar befestigt.

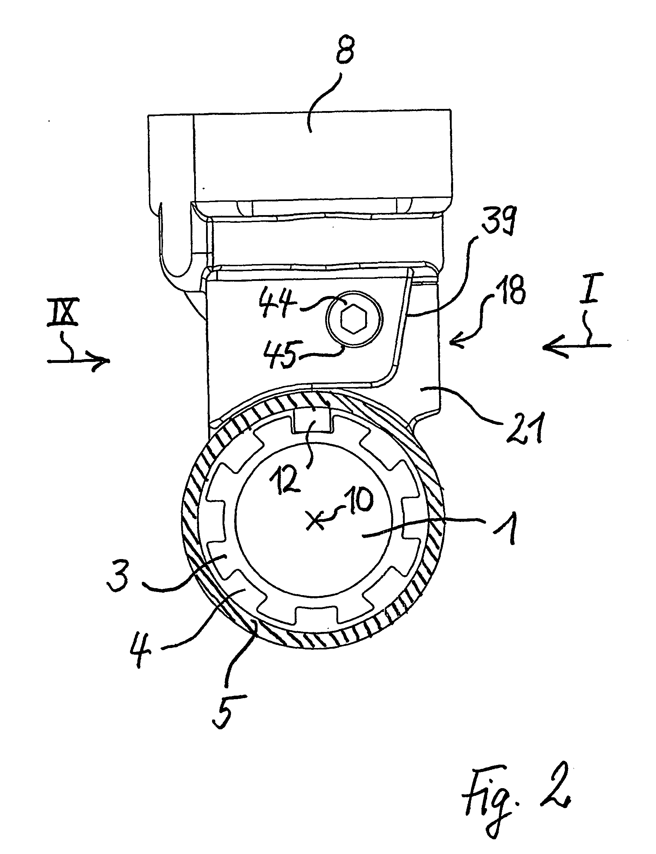

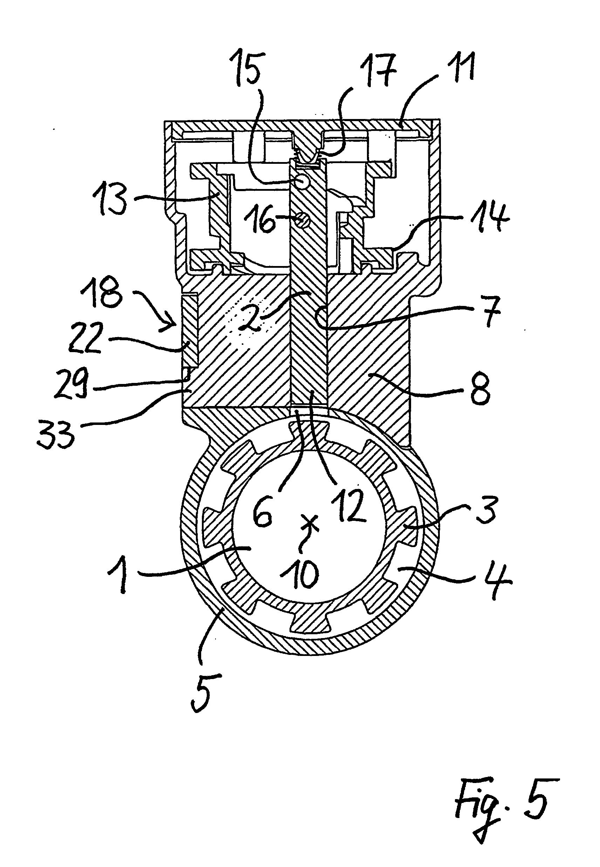

Das Sperrglied 2 ist zwischen der aus Fig. 2 bis 4 ersichtlichen Sperrstellung, in welcher es mit seinem der Lenkspindel 1 benachbarten Ende 12 in eine Spermut 4 der Sperrhülse 3 eingreift, so daß die Lenkspindel 1 nicht mehr gedreht werden kann, und der aus Fig. 5 ersichtlichen Freigabestellung hinund herbewegbar, in welcher das Sperrglied 2 mit seinem Ende 12 in keine Sperrnut 4 der Sperrhülse 3 eingreift und die Lenkspindel 1 freigibt, so daß sie gedreht werden kann.

Zur Axialverschiebung des Sperrgliedes 2 in die Freigabestellung und in der entgegengesetzten Richtung in die Sperrstellung dient ein mittels eines nicht dargestellten Elektromotors mit umkehrbarer Drehrichtung hin- und herdrehbares Steuerglied 13. Das Steuerglied 13 ist im wesentlichen koaxial zum Sperrglied 2 angeordnet, umgibt das Sperrglied 2 und ist im Gehäuse 8 um eine zur Längsachse 9 des Sperrgliedkanals 7 parallele Achse zwischen einer zu dieser Achse koaxialen Ringfläche des Gehäuses 8 und einem zu dieser Achse koaxialen Kranz von Innenvorsprüngen des Gehäusedeckels 11 drehbar gelagert. Das Steuerglied 13 ist als hülsenförmiges Schneckenrad mit einer Außenverzahnung 14 ausgebildet, in welche eine nicht gezeigte Antriebsschnecke eingreift, die auf der Ausgangswelle des Elektromotors befestigt ist.

Das Sperrglied 2 ist mit zwei äußeren Vorsprüngen 15, 16 versehen, mit welchen zwei innere Schrägflächen des Steuergliedes 13 zusammenwirken. Die beiden Schrägflächen weisen dieselbe Steigung auf und gehen jeweils an ihren beiden Enden in je eine Endfläche über, welche in einer zur Drehachse des Steuergliedes 13 senkrechten Ebene liegt. Zwischen dem Sperrglied 2 und dem Gehäusedeckel 11 ist eine Schraubendruckfeder 17 angeordnet, welche die Vorsprünge 15, 16 des Sperrgliedes 2 gegen die Schrägflächen und die Endflächen des Steuergliedes 13 drückt.

Wenn das Sperrglied 2 sich in der Sperrstellung befindet, dann liegen seine beiden Vorsprünge 15, 16 jeweils auf der zugehörigen Endfläche des Steuergliedes 13 auf, welche der Lenkspindel 1 näher ist. Wenn das Sperrglied 2 die Freigabestellung einnimmt, dann liegen seine beiden Vorsprünge 15, 16 jeweils auf der zugehörigen Endfläche des Steuergliedes 13 auf, welche der Lenkspindel 1 ferner ist. Um das Sperrglied 13 entgegen der Wirkung der Schraubendruckfeder 17 aus der Sperrstellung axial in die Freigabestellung zu verschieben und unter der Wirkung der Schraubendruckfeder 17 aus der Freigabestellung axial in die Sperrstellung laufen zu lassen, wird der erwähnte Elektromotor eingeschaltet, so daß er das Steuerglied 13 im Uhrzeigersinn bzw. entgegen dem Uhrzeigersinn dreht und die beiden Vorsprünge 15, 16 des Sperrgliedes 2 über die beiden Schrägflächen des Steuergliedes 13 von den beiden lenkspindelnahen Endflächen zu den beiden lenkspindelfernen Endflächen bzw. umgekehrt von den beiden lenkspindelfernen Endflächen zu den beiden lenkspindelnahen Endflächen des Steuergliedes 13 laufen.

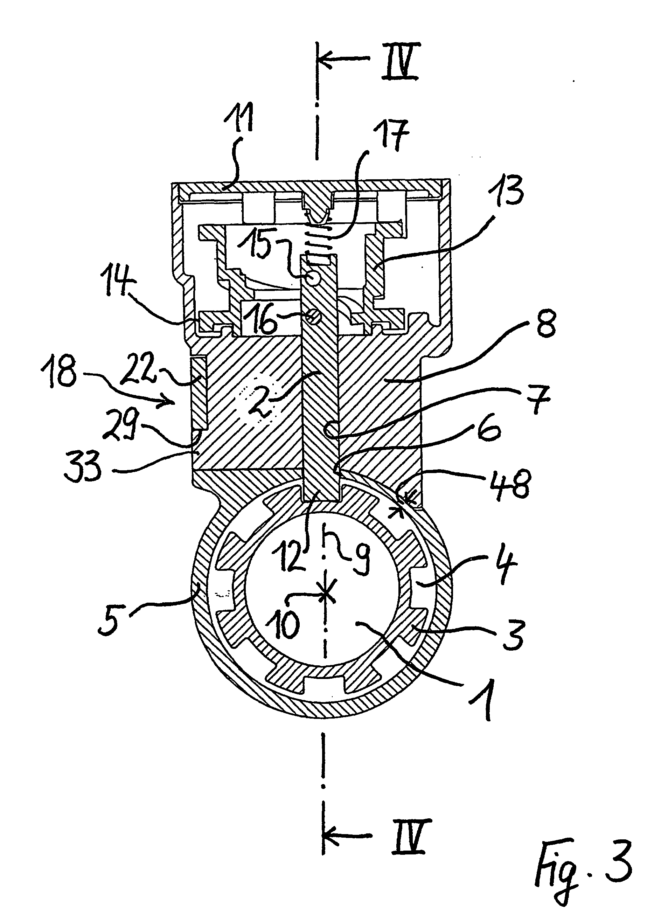

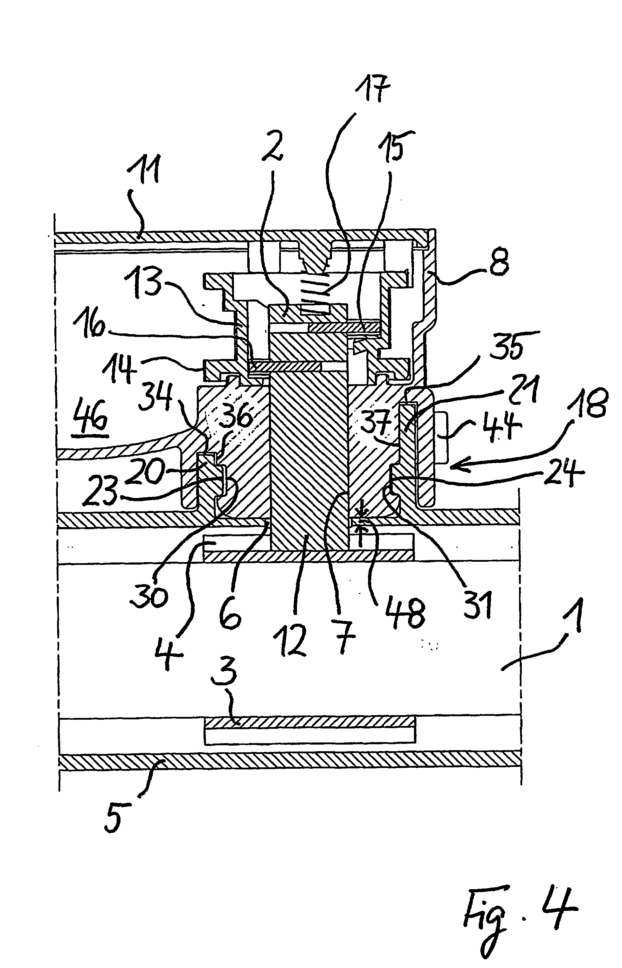

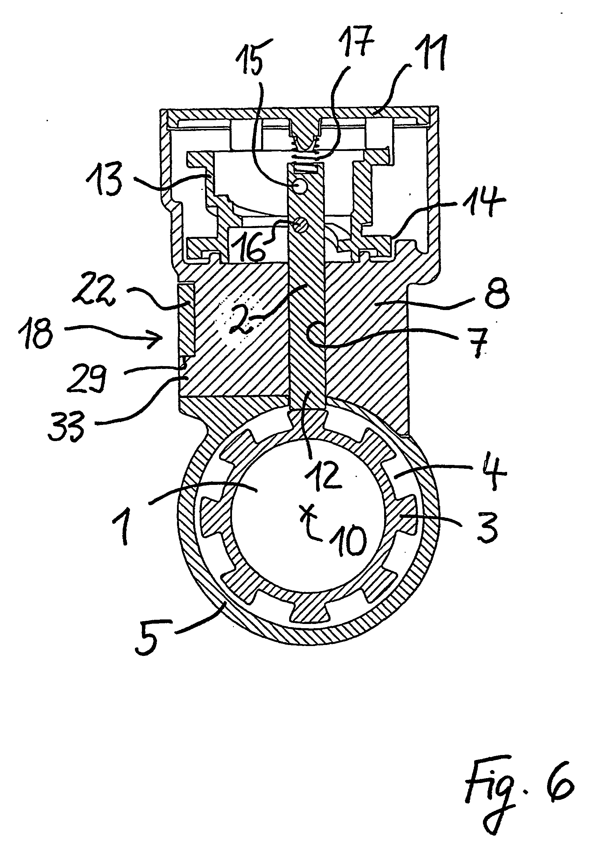

Gemäß Fig. 6 kann sich das Steuerglied 13 auch dann ungehindert entgegen dem Uhrzeigersinn in die Drehstellung nach Fig. 3 und 4 drehen, wenn dabei keine Sperrnut 4 der auf der Lenkspindel 1 sitzenden Sperrhülse 3 auf das Sperrglied 2 ausgerichtet ist, um dessen freies Ende 12 aufzunehmen. Aus der in Fig. 6 dargestellten Vorsperrstellung wird das Sperrglied 2 durch die Schraubendruckfeder 17 weiter in Richtung auf die Lenkspindel 1 bewegt, um mit seinem Ende 12 in eine der beiden benachbarten Sperrnuten 4 der Sperrhülse 3 einzugreifen und die aus Fig. 2 bis 4 ersichtliche Sperrstellung einzunehmen, sobald die Lenkspindel 1 so gedreht worden ist, daß die Sperrnut 4 auf das Sperrglied 2 ausgerichtet ist.

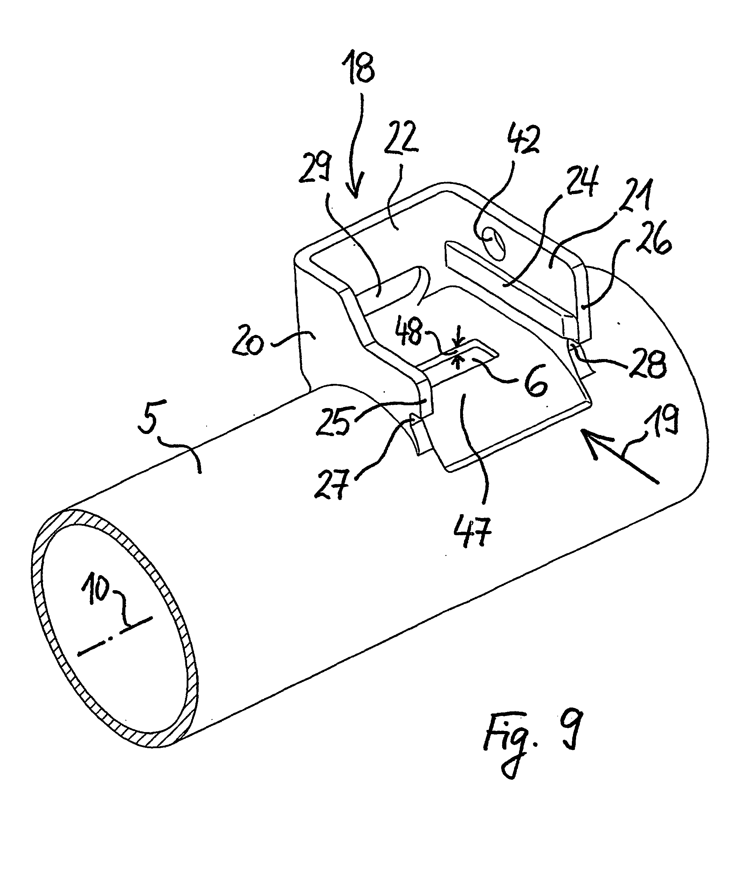

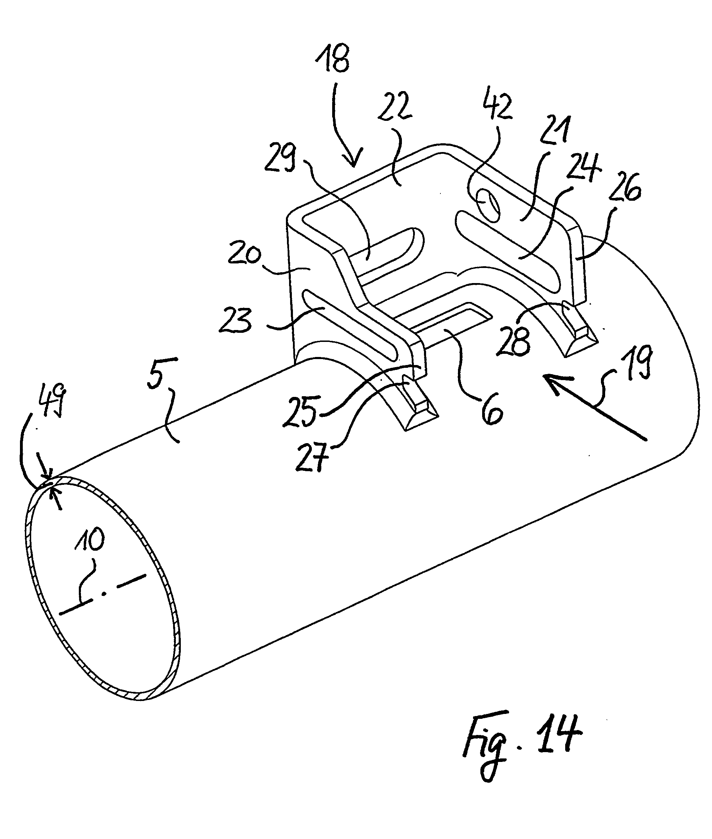

Zur lösbaren Befestigung des Gehäuses 8 am Mantelrohr 5 ist das Mantelrohr 5 mit einem äußeren Aufnehmer 18 für das Gehäuse 8 versehen, in welchen das Gehäuse 8 quer zur Längsachse 10 des Mantelrohres 5 in Richtung des Pfeils 19 in Fig. 9, 14 eingeschoben wird. Der Aufnehmer 18 ist U-förmig ausgebildet und weist zwei quer zur Längsachse 10 des Mantelrohres 5 verlaufende Seitenwände 20, 21 sowie eine parallel zur Längsachse 10 des Mantelrohres 5 verlaufende Stirnwand 22 auf, welche sich in einer zur Gehäuseeinschubrichtung 19 senkrechten Tangentialebene des Mantelrohres 5 erstreckt.

Die beiden beiderseits der Sperrglieddurchgangsöffnung 6 des Mantelrohres 5 angeordneten Seitenwände 20, 21 des Aufnehmers 18 sind mit zwei einander gegenüberliegenden, parallel zur Gehäuseeinschubrichtung 19 verlaufenden Innenvorsprüngen 23, 24 versehen und weisen jeweils an der der Stirnwand 22 des Aufnehmers 18 abgewandten Endkante 25 bzw. 26 eine Vertiefung 27 bzw. 28 auf. Die Stirnwand 22 des Aufnehmers 18 ist mit einer Öffnung 29 versehen, welche als Langloch ausgebildet ist, das sich parallel zur Längsachse 10 des Mantelrohres 5 erstreckt.

Das Gehäuse 8 weist zwei zueinander parallele Nuten 30, 31 und je einen Vorsprung 32 bzw. 33 am einen Ende und am anderen Ende des Nutenpaares 30, 31 auf, ferner zwei zueinander parallele Taschen 34, 35 beiderseits des Sperrgliedkanals 7. Die Nuten 30, 31 sind in den einander benachbarten Seitenwandungen 36, 37 der Taschen 34, 35 ausgebildet, welche jeweils an dem dem einen Vorsprung 33 benachbarten Ende 38 bzw. 39 und auf der Seite des Gehäuses 8, auf welcher das Sperrglied 2 aus dem Kanal 7 austritt, offen sind.

Das Gehäuse 8 wird in den Aufnehmer 18 eingeschoben, wenn das Sperrglied 2 in den Kanal 7 des Gehäuses 8 zurückgezogen ist, wie im Fall der Freigabestellung gemäß Fig. 5. Beim Einschieben laufen die offenen Enden 38, 39 der außerdem mantelrohrseitig offenen Taschen 34, 35 des Gehäuses 8 in der Einschubrichtung 19 vor.

Wenn das Gehäuse 8 in den Aufnehmer 18 eingeschoben worden ist, dann sind die beiden Seitenwände 20, 21 des Aufnehmers 18 jeweils in der einen Tasche 34 bzw. in der anderen Tasche 35 des Gehäuses 8 aufgenommen und darin geschützt. Außerdem greifen die beiden Innenvorsprünge 23, 24 des Aufnehmers 18 jeweils in die eine Nut 30 entsprechenden Querschnitts bzw. in die andere Nut 31 entsprechenden Querschnitts des Gehäuses 8 ein und die beiden Vorsprünge 32, 33 des Gehäuses 8 jeweils in die beiden Vertiefungen 27, 28 bzw. in das Langloch 29 des Aufnehmers 18. Dazu ist der mit den beiden Vertiefungen 27, 28 zusammenwirkende Vorsprung 32 mit einem der Form der Vertiefungen 27, 28 entsprechenden Querschnitt versehen und der mit dem Langloch 29 zusammenwirkende Vorsprung 33 als Leiste mit entsprechendem Umriß ausgebildet.

Dieses formschlüssige Ineinandergreifen des Gehäuses 8 und des Aufnehmers 18 gewährleistet in Kombination mit der U-förmigen Ausbildung des Aufnehmers 18, daß das Gehäuse 8 nur entgegen der Richtung des Pfeils 19 aus dem Aufnehmer 18 herausbewegt werden kann. Das ist allerdings nur dann möglich, wenn das Sperrglied 2 die Freigabestellung nach Fig. 5 einnimmt, nicht aber dann, wenn das Sperrglied 2 sich in der Sperrstellung nach Fig. 2 bis 4 oder in der Vorsperrstellung nach Fig. 6 befindet, weil dann das Ende 12 des Sperrgliedes 2 die innerhalb des Aufnehmers 18 vorgesehene Durchgangsöffnung 6 des Mantelrohres 5 durchsetzt und in eine Sperrnut 4 der auf der Lenkspindel 1 befestigten Sperrhülse 3 eingreift bzw. in die Durchgangsöffnung 6 des Mantelrohres 5 eingreift.

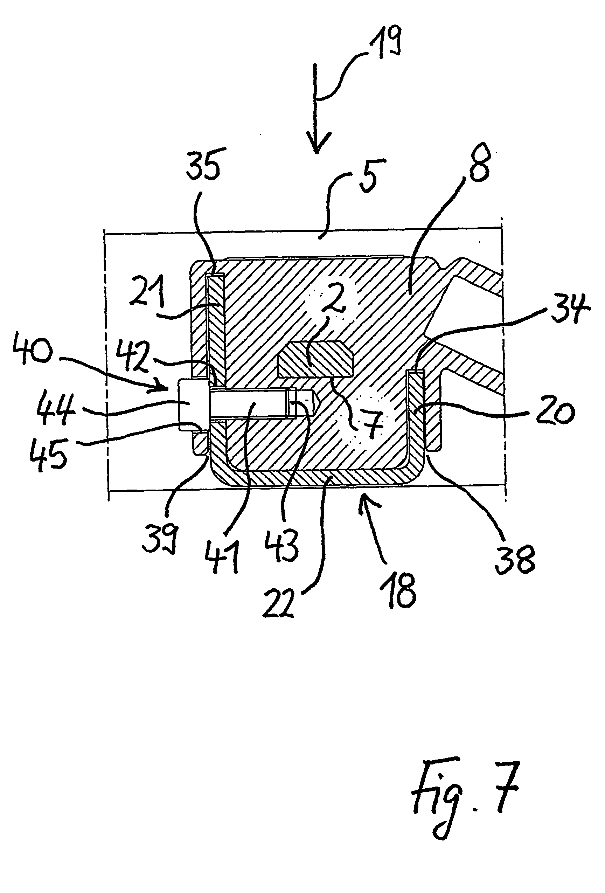

Der Aufnehmer 18 und das in denselben eingeschobene Gehäuse 8 sind zur Verhinderung von Klappern und zur gegenseitigen Fixierung auch in der aus Fig. 5 ersichtlichen Freigabestellung des Sperrgliedes 2 mittels einer Schraube 40 miteinander verspannt, deren Schaft 41 sich durch ein Loch 42 in der in Fig. 7 linken Seitenwand 21 des Aufnehmers 18 erstreckt und in eine Gewindebohrung 43 des Gehäuses 8 eingeschraubt ist. Der Kopf 44 der Schraube 40 liegt an der Seitenwand 21 des Aufnehmers 18 auf der dem Sperrglied 2 und der Gewindebohrung 43 des Gehäuses 8 abgewandten Seite der Seitenwand 21 an und ist in einem in die die Seitenwand 21 enthaltende Tasche 35 des Gehäuses 8 führenden Loch 45 des Gehäuses 8 aufgenommen.

Das Gehäuse 8 läßt sich also sehr leicht am Mantelrohr 5 montieren und vom Mantelrohr 5 wieder demontieren, wobei eine unbefugte Demontage allerdings unmöglich ist, wenn nämlich das Sperrglied 2 sich in seiner Sperr- oder Vorsperrstellung befindet.

Das Gehäuse 8 weist einen seitlich abstehenden Teil 46 auf, in welchem der Elektromotor zum Antrieb des Steuergliedes 13 und die in die Außenverzahnung 14 des Steuergliedes 13 eingreifende Antriebsschnecke angeordnet sind. Nach dem Einschieben des Gehäuses 8 in den Aufnehmer 18 erstreckt sich der seitlich abstehende Teil 46 des Gehäuses 8 parallel zur Längsachse 10 des Mantelrohres 5, was aufgrund der relativ geringen Angriffsmöglichkeiten ein gewaltsames Entfernen des Gehäuses 8 vom Mantelrohr 5 sehr erschwert, wenn nicht unmöglich macht.

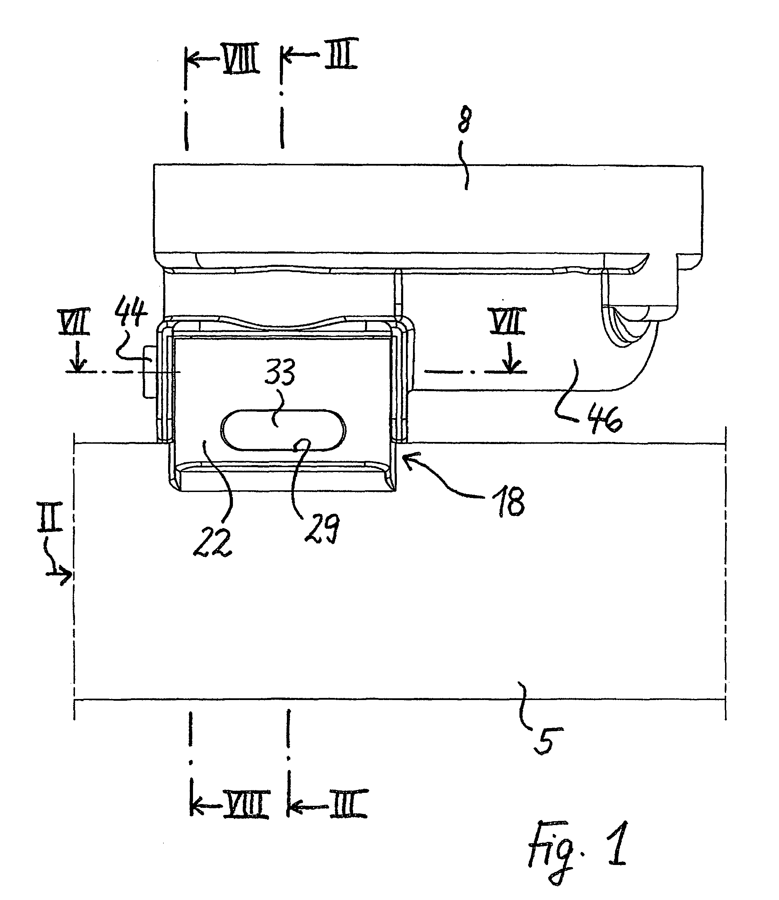

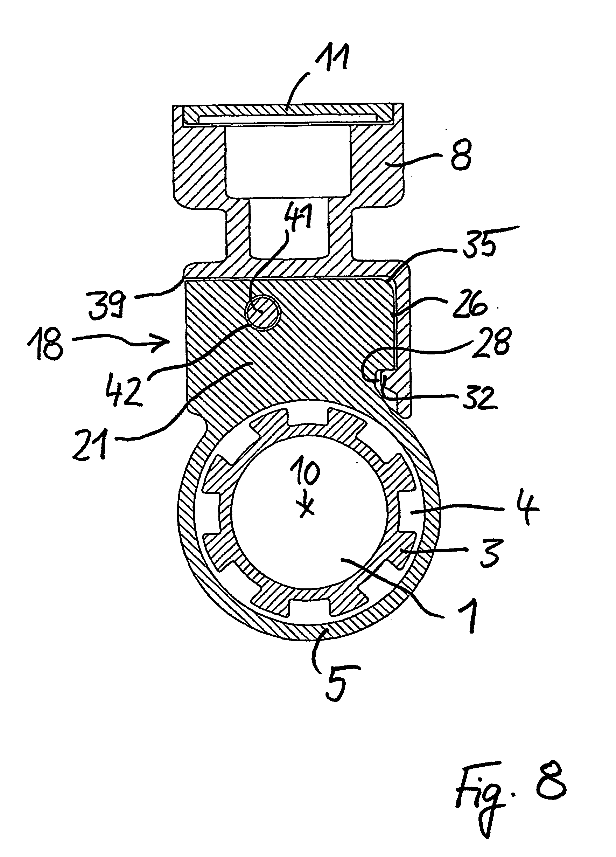

Bei der Vorrichtung gemäß Fig. 1 bis 10 sind das Mantelrohr 5 und der Aufnehmer 18 als einstückiges Gußteil ausgebildet. Die das Einschieben des Gehäuses 8 in den Aufnehmer 18 quer zur Längsachse 10 des Mantelrohres 5 erlaubende Ausgestaltung des Aufnehmers 18 ermöglicht das gemeinsame Gießen des Mantelrohres 5 und des Aufnehmers 18, ohne irgendwelchen Einschränkungen hinsichtlich der Form des Mantelrohres 5 und in Bezug auf das Gießwerkzeug unterworfen zu sein.

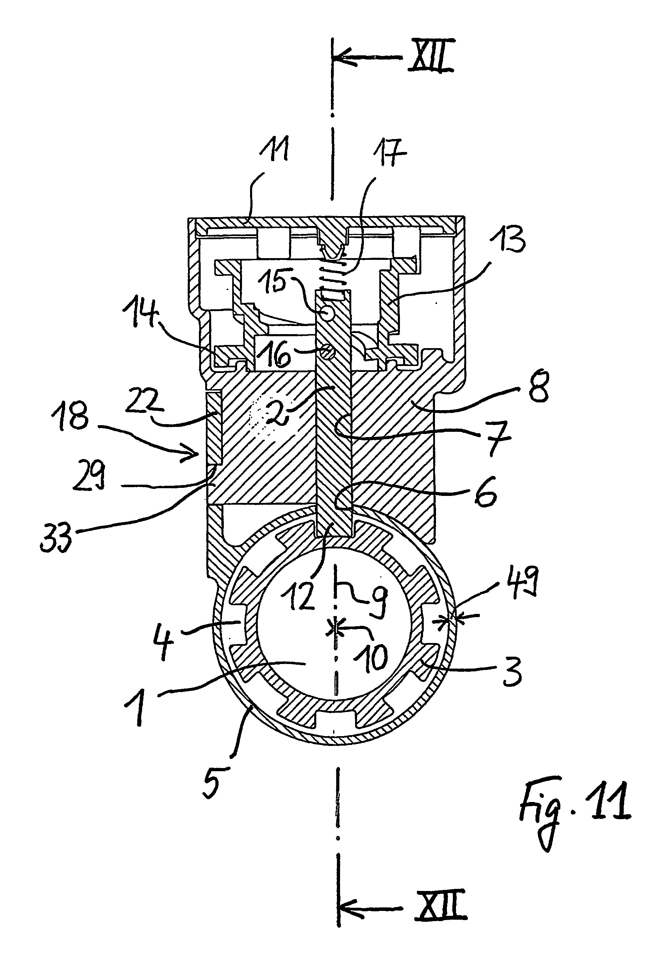

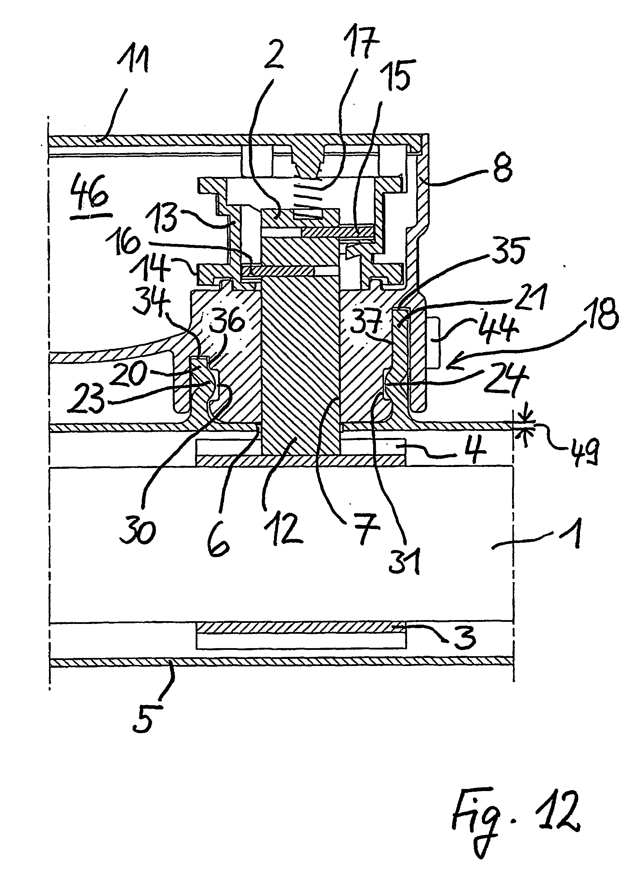

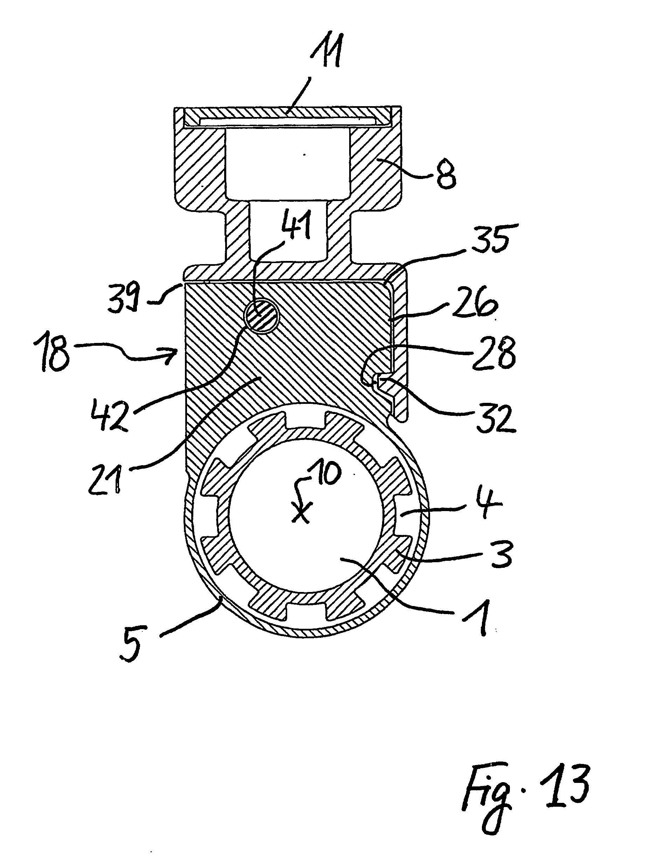

Die Vorrichtung gemäß Fig. 11 bis 14 unterschiedet sich von derjenigen nach Fig. 1 bis 10 im wesentlichen nur dadurch, daß das Mantelrohr 5 und der Aufnehmer 18 jeweils aus Blech bestehen und miteinander verschweißt sind.

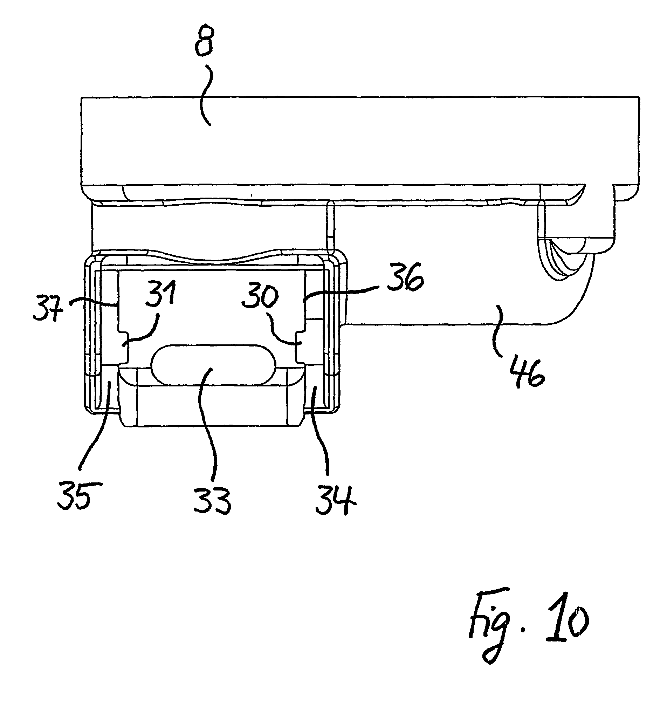

Bei der Vorrichtung nach Fig. 1 bis 10 weist das gegossene Mantelrohr 5 im Bereich 47 innerhalb des gegossenen Aufnehmers 18 eine verminderte Wandstärke 48 auf, wie aus Fig. 4 besonders deutlich hervorgeht. Die verminderte Wandstärke 48 entspricht der Wandstärke 49 des vergleichbaren Blechrohres 5 der Vorrichtung gemäß Fig. 11 bis 14, so daß dasselbe Gehäuse 8 gemäß Fig. 10 sowohl am gegossenen Mantelrohr 5 nach Fig. 9 als auch am Mantelrohr 5 aus Blech nach Fig. 14 montiert werden kann.

## Patentansprüche

1. Vorrichtung zum Sperren einer Lenkspindel (1) eines Kraftfahrzeugs gegen Drehen mit einem in einem Gehäuse (8) zwischen einer Sperrstellung und einer Freigabestellung hin- und herbewegbaren Sperrglied (2), wobei das Gehäuse (8) an einem die Lenkspindel (1) umgebenden Mantelrohr (5) lösbar befestigt wird und das Mantelrohr (5) einen Aufnehmer (18) aufweist, in welchen das Gehäuse (8) einschiebbar ist, **dadurch gekennzeichnet, daß** das Gehäuse (8) quer zur Längsachse (10) und tangential (19) zum Mantelrohr (5) in den Aufnehmer (18) einschiebbar ist.

2. Vorrichtung nach Anspruch 1, **dadurch gekennzeichnet, daß** der Aufnehmer (18) U-förmig ausgebildet ist und zwei quer zur Längsachse (10) des Mantelrohres (5) verlaufende Seitenwände (20,21) sowie eine parallel zur Längsachse (10) des Mantelrohres (5) verlaufende Stirnwand (22) aufweist.

3. Vorrichtung nach Anspruch 2, **dadurch gekennzeichnet, daß** die Stirnwand (22) des Aufnehmers (18) sich senkrecht zur Gehäuseeinschubrichtung (19) erstreckt.

4. Vorrichtung nach Anspruch 3, **dadurch gekennzeichnet, daß** die Stirnwand (22) des Aufnehmers (18) tangential zum Mantelrohr (5) orientiert ist.

5. Vorrichtung nach Anspruch 2, 3 oder 4, **dadurch gekennzeichnet, daß** die beiden Seitenwände (20,21) des Aufnehmers (18) mit zwei einander gegenüberliegenden, parallel zur Gehäuseeinschubrichtung (19) verlaufenden Innenvorsprüngen (23,24) zum Eingriff in zwei Nuten (30,31) des Gehäuses (8) versehen sind.

6. Vorrichtung nach Anspruch 2, 3, 4 oder 5, **dadurch gekennzeichnet, daß** die Stirnwand (22) des Aufnehmers (18) mit einer Öffnung (29) zur Aufnahme eines Vorsprungs (33) des Gehäuses (8) versehen ist.

7. Vorrichtung nach Anspruch 6, **dadurch gekennzeichnet, daß** die Öffnung (29) der Stirnwand (22) des Aufnehmers (18) als zur Längsachse (10) des Mantelrohres (5) paralleles Langloch und der Vorsprung (33) des Gehäuses (8) als Leiste mit entsprechendem Umriß ausgebildet sind.

8. Vorrichtung nach einem der Ansprüche 2 bis 7, **dadurch gekennzeichnet, daß** die beiden Seitenwände (20,21) des Aufnehmers (18) jeweils an der der Stirnwand (22) des Aufnehmers (18) abgewandten Endkante (25 bzw. 26) mit einer Vertiefung (27 bzw. 28) zur Aufnahme eines Vorsprungs (32) des Gehäuses (8) versehen sind.

9. Vorrichtung nach einem der Ansprüche 2 bis 8, **dadurch gekennzeichnet, daß** das Gehäuse (8) zwei zueinander parallele, an den in Gehäuseeinschubrichtung (19) vorlaufenden Enden (38,39) offene und mantelrohrseitig offene Taschen (34,35) zur Aufnahme der beiden Seitenwände (20,21) des Aufnehmers (18) aufweist.

10. Vorrichtung nach einem der vorstehenden Ansprüche, **dadurch gekennzeichnet, daß** der Aufnehmer (18) und das in den Aufnehmer (18) eingeschobene Gehäuse (8) mittels einer Schraube (40) miteinander verspannbar sind.

11. Vorrichtung nach Anspruch 10 in Verbindung mit einem der Ansprüche 2 bis 9, **dadurch gekennzeichnet, daß** der Schaft (41) der Schraube (40) durch ein Loch (42) in einer Seitenwand (21) des Aufnehmers (18) hindurch in eine Gewindebohrung (43) des Gehäuses (8) einschraubbar ist.

12. Vorrichtung nach einem der vorstehenden Ansprüche, **dadurch gekennzeichnet, daß** das Mantelrohr (5) innerhalb des Aufnehmers (18) eine Durchgangsöffnung (6) für das Sperrglied (2) aufweist, so daß das in den Aufnehmer (18) eingeschobene Gehäuse (8) durch das Sperrglied (2) im Aufnehmer (18) verriegelt wird, wenn das Sperrglied (2) sich nicht in seiner Freigabestellung befindet.

13. Vorrichtung nach einem der vorstehenden Ansprüche, **dadurch gekennzeichnet, daß** das Sperrglied (2) bolzenförmig ausgebildet und in dem in den Aufnehmer (18) eingeschobenen Gehäuse (8) entlang einer zur Längsachse (10) der Lenkspindel (1) im wesentlichen senkrechten Bahn axial verschiebbar ist.

14. Vorrichtung nach einem der vorstehenden Ansprüche, **dadurch gekennzeichnet, daß** das Gehäuse (8) einen seitlich abstehenden Teil (46) aufweist, welcher sich nach dem Einschieben des Gehäuses (8) in den Aufnehmer (18) parallel zur Längsachse (10) des Mantelrohres (5) erstreckt.

15. Vorrichtung nach einem der vorstehenden Ansprüche, **dadurch gekennzeichnet, daß** das Mantelrohr (5) ein Blechrohr ist, an welches der aus Blech bestehende Aufnehmer (18) angeschweißt ist.

16. Vorrichtung nach einem der Ansprüche 1 bis 14, **dadurch gekennzeichnet, daß** das Mantelrohr (5) und der Aufnehmer (18) ein einstückiges Gußteil sind.

17. Vorrichtung nach Anspruch 16, **dadurch gekennzeichnet, daß** das gegossene Mantelrohr (5) im Bereich (47) innerhalb des gegossenen Aufnehmers (18) eine verminderte Wandstärke (48) aufweist, welche der Wandstärke (49) eines vergleichbaren Blechrohres entspricht.

## Claims

1. Device for locking the rotation of a steering spindle (1) of a motor vehicle, with a locking element (2) disposed in a housing (8) and displaceable to and fro between a locked position and a released position, wherein the housing (8) is attached in a detachable manner to a tubular casing (5) enclosing the steering spindle (1), and wherein the tubular casing (5) is fitted with a mounting bracket (18) into which the housing (8) can be inserted
**characterised in that**
the housing (8) is inserted into the mounting bracket (18) transversely to the longitudinal axis (10) of and tangentially (19) to the tubular casing (5).

2. Device according to claim 1, **characterised in that** the mounting bracket (18) is U-shaped and comprises two side walls (20, 21) running transversely to the longitudinal axis (10) of the tubular casing (5) and an end wall (22) running parallel to the longitudinal axis (10) of the tubular casing (5).

3. Device according to claim 2, **characterised in that** the end wall (22) of the mounting bracket (18) extends perpendicular to the direction (19) of insertion of the housing.

4. Device according to claim 3, **characterised in that** the end wall (22) of the mounting bracket (18) is aligned tangentially to the tubular casing (5).

5. Device according to claim 2, 3 or 4, **characterised in that** the two side walls (20, 21) of the mounting bracket (18) are provided with two mutually opposing internal projections (23, 24) running parallel to the direction (19) of insertion of the housing for engagement with two channels (30, 31) of the housing (8).

6. Device according to claim 2, 3, 4 or 5, **characterised in that** the end wall (22) of the mounting bracket (18) is provided with an aperture (29) for the reception of a projection (33) of the housing (8).

7. Device according to claim 6, **characterised in that** the aperture (29) of the end wall (22) of the mounting bracket (18) is configured as a slot parallel to the longitudinal axis (10) of the tubular casing (5), and that the projection (33) of the housing (8) is shaped as a strip of matching contour.

8. Device according to any one of claims 2 to 7, **characterised in that,** at the terminal edge (25 and 26 respectively) facing away from the end wall (22) of the mounting bracket (18), the two side walls (20, 21) of the mounting bracket (18) each comprise a recess (27 and 28 respectively) for the reception of a projection (32) of the housing (8).

9. Device according to any one of claims 2 to 8, **characterised in that** the housing (8) comprises two mutually parallel pockets (34, 35), which are open at the ends (38, 39) facing in the direction (19) of insertion of the housing and open on the side facing the tubular casing (5), for the reception of the two side walls (20, 21) of the mounting bracket (18).

10. Device according to any one of the preceding claims, **characterised in that** the mounting bracket (18) and the housing (8) inserted into it can be clamped to one another by means of a screw (40).

11. Device according to claim 10 in combination with any one of claims 2 to 9, **characterised in that** the shaft (41) of the screw (40) can be screwed into a threaded borehole (43) of the housing (8), said shaft (41) passing through a borehole (42) in a side wall (21) of the mounting bracket (18).

12. Device according to any one of the preceding claims, **characterised in that** the tubular casing (5) has a through-opening (6) in the mounting bracket (18) for the locking element (2), so that after insertion into the mounting bracket (18), the housing (8) is locked in the mounting bracket (18) by the locking element (2) unless the locking element (2) is disposed in its released position.

13. Device according to any one of the preceding claims, **characterised in that** the locking element (2) is shaped as a bolt and, within the housing (8) inserted in the mounting bracket (18), can be displaced axially along a path, which is substantially perpendicular to the longitudinal axis (10) of the steering spindle (1).

14. Device according to any one of the preceding claims, **characterised in that** the housing (8) comprises a laterally projecting part (46) which extends parallel to the longitudinal axis (10) of the tubular casing (5) when the housing (8) is inserted into the mounting bracket (18).

15. Device according to any one of the preceding claims, **characterised in that** the tubular casing (5) is a sheet metal tube, to which the mounting bracket (18), which consists of sheet metal, is welded.

16. Device according to any one of claims 1 to 14, **characterised in that** the tubular casing (5) and the mounting bracket (18) are cast as one integral component.

17. Device according to claim 16, **characterised in that** the cast tubular casing (5) has a reduced wall thickness (48) in the region (47) inside the cast mounting bracket (18), wherein the wall thickness (48) corresponds to the wall thickness (49) of a comparable sheet metal tube.

## Revendications

1. Dispositif pour le blocage en rotation d'une colonne de direction (1) d'un véhicule à moteur avec un organe de verrouillage (2) mobile en va-et-vient dans un corps (8) entre une position de verrouillage et une position de déverrouillage, le corps (8) étant fixé de manière amovible sur un tube d'enveloppe (5) entourant la colonne de direction (1) et le tube d'enveloppe (5) présentant un logement (18) dans lequel le corps (8) peut être inséré, **caractérisé en ce que** le corps (8) peut être inséré dans le logement (18) transversalement à l'axe longitudinal (10) du tube d'enveloppe (5) et de façon tangente à celui-ci.

2. Dispositif selon la revendication 1, **caractérisé en ce que** le logement (18) est en forme de U et présente deux parois latérales (20, 21) transversales à l'axe longitudinal (10) du tube d'enveloppe (5) ainsi qu'une paroi frontale (22) parallèle à l'axe longitudinal (10) du tube d'enveloppe (5).

3. Dispositif selon la revendication 2, **caractérisé en ce que** la paroi frontale (22) du logement (18) s'étend perpendiculairement au sens d'insertion du corps (19).

4. Dispositif selon la revendication 3, **caractérisé en ce que** la paroi frontale (22) du logement (18) est tangente au tube d'enveloppe (5).

5. Dispositif selon la revendication 2, 3 ou 4, **caractérisé en ce que** les deux parois latérales (20, 21) du logement (18) sont pourvues de deux saillies intérieures (23, 24) opposées et parallèles au sens d'insertion du corps (19), destinées à se mettre en prise dans deux gorges (30, 31) du corps (8).

6. Dispositif selon la revendication 2, 3, 4 ou 5, **caractérisé en ce que** la paroi frontale (22) du logement (18) est pourvue d'une ouverture (29) destinée à recevoir une saillie (33) du corps (8).

7. Dispositif selon la revendication 6, **caractérisé en ce que** l'ouverture (29) de la paroi frontale (22) du logement (18) est conformée comme un trou allongé parallèle à l'axe longitudinal (10) du tube d'enveloppe (5) et la saillie (33) du corps (8) comme une barrette ayant un contour correspondant.

8. Dispositif selon l'une des revendications 2 à 7, **caractérisé en ce que** chacune des deux parois latérales (20, 21) du logement (18) est pourvue, sur son bord d'extrémité (25 ou 26) orienté à l'opposé de la paroi frontale (22) du logement (18), d'un renfoncement (27 ou 28) destiné à recevoir une saillie (32) du corps (8).

9. Dispositif selon l'une des revendications 2 à 8, **caractérisé en ce que** le corps (8) présente deux poches (34, 35) parallèles l'une à l'autre, ouvertes aux extrémités (38, 39) venant en avant dans le sens d'insertion du corps (19) et ouvertes du côté du tube d'enveloppe, destinées à recevoir les deux parois latérales (20, 21) du logement (18).

10. Dispositif selon l'une des revendications précédentes, **caractérisé en ce que** le logement (18) et le corps (8) inséré dans le logement (18) peuvent être serrés l'un à l'autre au moyen d'une vis (40).

11. Dispositif selon la revendication 10 associée à l'une des revendications 2 à 9, **caractérisé en ce que** la tige (41) de la vis (40) peut être vissée dans un alésage fileté (43) du corps (8) à travers un trou (42) dans une paroi latérale (21) du logement (18).

12. Dispositif selon l'une des revendications précédentes, **caractérisé en ce que** le tube d'enveloppe (5) présente à l'intérieur du logement (18) une ouverture de passage (6) pour l'organe de verrouillage (2), de telle manière que le corps (8) inséré dans le logement (18) soit verrouillé dans le logement (18) par l'organe de verrouillage (2) lorsque l'organe de verrouillage (2) ne se trouve pas dans sa position de déverrouillage.

13. Dispositif selon l'une des revendications précédentes, **caractérisé en ce que** l'organe de verrouillage (2) est conçu en forme de boulon et est mobile dans le corps (8) inséré dans le logement (18) dans le sens axial le long d'une trajectoire sensiblement perpendiculaire à l'axe longitudinal (10) de la colonne de direction (1).

14. Dispositif selon l'une des revendications précédentes, **caractérisé en ce que** le corps (8) possède une partie saillante latéralement (46) qui, après l'insertion du corps (8) dans le logement (18), s'étend parallèlement à l'axe longitudinal (10) du tube d'enveloppe (5).

15. Dispositif selon l'une des revendications précédentes, **caractérisé en ce que** le tube d'enveloppe (5) est un tube de tôle sur lequel le logement (18) en tôle est soudé.

16. Dispositif selon l'une des revendications 1 à 14, **caractérisé en ce que** le tube d'enveloppe (5) et le logement (18) sont une pièce en fonte d'un seul tenant.

17. Dispositif selon la revendication 16, **caractérisé en ce que** le tube d'enveloppe (5) en fonte possède dans la zone (47) située à l'intérieur du logement (18) en fonte une épaisseur de paroi réduite (48) correspondant à l'épaisseur de paroi (49) d'un tube en tôle comparable.
